# EUROPÄISCHE PATENTSCHRIFT

(11) **EP 2 674 375 B1**
(45) Veröffentlichungstag und Bekanntmachung des Hinweises auf die Patenterteilung: **09.08.2017**
(21) Anmeldenummer: 13172120.1
(22) Anmeldetag: 14.06.2013
(51) Int. Cl.: B65D 90/52, B60K 15/077, B60P 3/22

(54) **Schwallwandelement und Schwallwandanordnung, Tankcontainer und Behälter damit**
Baffle element and baffle assembly, tank container and container therewith
Elément de paroi anti-clapot et agencement de paroi anti-clapot, conteneur citerne et conteneur munis d'un tel élément

(30) Priorität: 15.06.2012 DE 102012105225
(43) Veröffentlichungstag der Anmeldung: 18.12.2013
(73) Patentinhaber: Welfit Oddy (Pty) Limited, Port Elizabeth 6001 (ZA)
(72) Erfinder: Rigby, Sydney Vernon, Port Elizabeth (ZA); McLaren, Timothy, Port Elizabeth (ZA)
(74) Vertreter: MFG Patentanwälte Meyer-Wildhagen Meggle-Freund Gerhard PartG mbB

(56) Entgegenhaltungen:
- EP-A1- 2 058 245
- EP-A1- 2 412 647
- WO-A1-92/03359
- CN-Y- 201 317 553
- CN-Y- 201 362 478
- SU-A1- 981 121

## Beschreibung

### GEBIET DER ERFINDUNG

Die vorliegende Erfindung bezieht sich allgemein auf ein Schwallwandelement und insbesondere auf eine Schwallwandanordnung sowie einen Transportbehälter, insbesondere ein Tankcontainer, mit einem Schwallwandelement bzw. einer Schwallwandanordnung.

### HINTERGRUND DER ERFINDUNG

Schwallwandelemente und daraus zusammengesetzte Schwallwandanordnungen werden in Transportbehältern und insbesondere in Tankcontainern eingesetzt, die auch teilgefüllt transportiert werden sollen. Sie dienen dazu, den Schwall eines flüssigen Ladegutes bei Verzögerungen oder Beschleunigungen solcher Transporttanks zu behindern und erheblich zu reduzieren. Dazu decken diese Schwallwandanordnungen wenigstens 70% (nach den einschlägigen Transportvorschriften) des relevanten Querschnitts des Behälterinnenraums ab. Der relevante Querschnitt verläuft bei den in der Regel länglichen Transportbehältern quer zu deren Längsachse. Typische Behälterinnenräume haben einen kreiszylindrischen, elliptischen, kofferförmigen oder auch rechteckigen Querschnitt und sind an ihren Enden mit gewölbten oder ebenen Böden verschlossen. Es gibt auch Tankquerschnitte die kleeblattförmig bzw. aus mehreren Kreissegmenten zusammengesetzt sind.

Typische Schwallwandelemente im Tankcontainerbereich sind beispielsweise als mit Öffnungen versehene Scheibenelemente ausgeführt, die den Behälterguerschnitt - abgesehen von den Öffnungen - mehr oder weniger vollständig ausfüllen (siehe z.B. in EP 2 058 245 A1).

Die Öffnungen dienen zum einen dazu, dass die durch die Schwallwandelemente voneinander abgetrennten Kammern des Behälters in kommunizierender Verbindung stehen und ein Flüssigkeitsaustausch zwischen den Kammern gewährleistet ist. Und zum anderen dienen sie dazu, dass die einzelnen Kammern durch passierbare Öffnungen zugänglich bleiben, um Revisions- und/oder Instandhaltungsarbeiten durchführen zu können. Entsprechende Öffnungen sind im Sohlen- und/oder Scheitelbereich aber auch in den seitlichen Flankenbereichen der Behälter vorgesehen.

Die Scheiben selbst sind aus sphärisch oder torisphärisch gewölbten Scheiben hergestellt - meist ausdem gleichen Material wie der Behälter selbst - und sind direkt oder indirekt über Dopplerbleche mit dem Behältermantel verbunden (bei metallischen Behältern in der Regel verschweißt). Durchstiegsöffnungen sind als runde oder ovale Ausnehmungen ausgebildet, die für einen Menschen passierbar sind.

Solche Schwallwände sind fertigungsoptimiert und im Hinblick auf Festigkeitsaspekte ausgereift, haben jedoch Nachteile hinsichtlich der Reinigung und der Zugänglichkeit der einzelnen Behälterkammern. Es ist insbesondere schwierig, aus einem Behälter, der mit solchen Schwallwänden ausgestattet ist, verunfallte Personen in kurzer Zeit zu bergen. Die an sich zwar passierbaren Öffnungen sind nämlich mit einer Rettungsausrüstung (Atemschutzausrüstung, Schutzanzug, etc.) nur schwer zugänglich. Eine Personenrettung ist so auf jeden Fall sehr schwierig.

Auch die Reinigung solcher Behälter ist vergleichsweise aufwändig, da für jede einzelne Kammer eine Sprühkopföffnung vorgesehen werden musst. Transportbehälter und Tankcontainer werden typischerweise in speziellen Reinigungsstationen gereinigt, an denen entsprechende Düsenköpfe über geeignete Reinigungsöffnungen in das Behälterinnere eingeführt und dort fixiert werden. Je mehr solche Sprühköpfe erforderlich sind, desto aufwändiger ist der Rüstvorgang und desto teurer wird damit der Reinigungsprozess.

Um diese Nachteile zu vermeiden, werden auch Schwallwandelemente eingesetzt, die aus mehr oder weniger ebenen, geschwungenen bzw. profilierten Segmenten gebildet werden. Doppelwandige, aus einer Ronde gefaltete, halbmondförmige Rippen mit ebenen Flächen zeigt beispielsweise FR 1.483.776. Die doppelwandige Ausführung macht solche Schwallwandelemente jedoch relativ schwer. Zusätzlich entsteht im Behälterinnenraum ein schwer inspizierbarer Hohlraum, der zusätzlich das vorhandene Nutzvolumen einschränkt.

Bogenförmig über mehrere Kantungen gekrümmte Halbmondelemente gemäß EP 2 058 245 A1 sind an den freien Kanten (der Sehne des Kreissegments mit runden oder tränenförmigen Rohrstücken verstärkt, die den Behälterinnenraum entlang der freien Kante vollständig durchsetzen. Diese Rohrstücke verstärken zwar einerseits die gebogenen halbmondförmigen Scheibenelemente, die dadurch in Tanklängsrichtung - in Richtung der Hauptschwallwirkung - hinreichend ausgesteift werden. Auf der anderen Seite bilden solche Rohre jedoch einen schwer kontrollierbaren Hohlraum im Behälterinneren. Solche Hohlräume sind unerwünscht, da Leckagen aus dem Behälterinneren in die Hohlräume nur schwer zu identifizieren sind (bei einer Druckprobe des Behälters bleiben sie z.B. unentdeckt). Bei Transportbehältern, die für unterschiedliche Ladegüter vorgesehen sind, kann ein erstes Ladegut über eine solche Leckage unentdeckt in den Hohlraum eintreten und nach einem Ladegutwechsel - selbst bei erfolgter Zwischenreinigung - wieder aus dem Hohlraum austreten und ein anderes Ladegut verunreinigen und unbrauchbar machen. Im schlimmsten Fall kann es sogar zu gefährlichen chemischen Reaktionen kommen. Verstärkungsrohre sind auch relativ schwer. Eine ähnliche Anordnung ist auch aus der CN 201 362 478 bekannt, bei welcher als Alternative zu einem Verstärkungsrohr eine den Behälterinnenraum durchsetzende, ebene Flanschleiste ausgebildet ist.

Schmale trapezprofilierte Schwallwandelemente, wie sie beispielsweise aus der CN 201317553 Y bzw. der EP 2 412 647 bekannt sind, bieten zwar auch eine gute schwallhemmende Wirkung und können darüber hinaus auch nachträglich durch die Mannlochöffnung in bereits fertiggestellte Transportbehälter oder Tankcontainer eingebaut werden (Nachrüstung). Sie können jedoch Gewichtsnachteile haben, da die erforderliche Steifigkeit eine bestimmte Stegtiefe (Profiltiefe) erfordert, die vergleichsweise materialintensiv ist.

Davon ausgehend besteht die Aufgabe, ein Schwallwandelement bzw. eine Schwallwandanordnung zur Verfügung zu stellen, welche die Nachteile der verfügbaren Lösungen wenigstens teilweise ausräumt. Insbesondere besteht die Aufgabe auch darin, eine gewichts- und fertigungsoptimierte Schwallwand bereitzustellen, die auch hinsichtlich der Reinigungs-, Funktions-, Wartungs- und/oder Inspektionseigenschaften Vorteile bietet.

### ZUSAMMENFASSUNG DER ERFINDUNG

Nach einem ersten Aspekt stellt die vorliegende Erfindung ein Schwallwandelement für einen Behälter dar, welches als ein einwandiges Wandelement ausgebildet ist, das eine Umfangskontur hat, die wenigstens teilweise dem Verlauf einer Wandkontur des Behälters entsprechend ausgebildet ist und aufueist:,
- eine Kante, die bei in den Behälter eingebautem Schwallwandelement einen Innenraum des Transportbehälters durchsetzt und die Enden der Umfangskontur miteinander verbindet,
- einen ersten gekrümmten Wandbereich mit einem ersten Krümmungsradius und einem zweiten gekrümmten Wandbereich mit einem zweiten Krümmungsradius, wobei der erste Krümmungsradius größer ist als der zweite Krümmungsradius und der zweite Wandbereich zwischen der Kante und dem ersten gekrümmten Wandbereich verläuft, wobei
- der erste und zweite Krümmungsradius (R, r) um parallel und auf der gleichen Seite des Schwall-wandelements (1) verlaufende Krümmungsachsen (7, 8) ausgebildet sind, so dass das Schwallwan-delement (1) ein tragflügelähnliches Profil aufweist..

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die beigefügte Zeichnung beschreiben. Darin zeigen:
- Fig. 1: mehrere erfindungsgemäße Schwallwandelemente, die paarweise zu Schwallwandanordnungen kombiniert sind und in Einbaulage in einem schematisch angedeuteten Behälter dargestellt sind;
- Fig. 2: Detail A aus Fig. 1;
- Fig. 3: eine Ansicht in Richtung der Behälterlängsachse einer Schwallwandanordnung (zwei erfindungsgemäßen Schwallwandelementen) aus Fig. 1;
- Fig. 4: den Schnitt B - B aus Fig. 3 mit Angaben zu Maßverhältnissen eines erfindungsgemäßen Schwallwandelements;
- Fig. 5: eine Längsschnittdarstellung der Anordnung aus Fig. 1 mit schematisch dargestellter Reinigungssituation in einer Ansicht von oben;
- Fig. 6: ein weiteres Ausführungsbeispiel einer Schwallwandanordnung mit erfindungsgemäßen Schwallwandelementen, die eine alternative Kantenausführung aufweisen;
- Fig. 7: Detail B aus Fig. 6 und Schnittansicht C - C aus Detail B;
- Fig. 8 A, B: Darstellungen zur Verdeutlichung unterschiedlicher Fertigungsverfahren für erfindungsgemäße Schwallwandelemente;
- Fig. 9 A - D: unterschiedliche Krümmungsverläufe bei Schwallwandelementen ;
- Fig. 9 E und F: durch Kantungen angenäherte Krümmungsverläufe der in Fig. 9A und 9B dargestellten Schwallwandelemente; und
- Fig. 10 A - D: Darstellungen einer zweiten Ausführungsform eines Schwallwandelements mit verbesserten Restlosentleerungseigenschaften.

### BESCHREIBUNG VON AUSFÜHRUNGSFORMEN

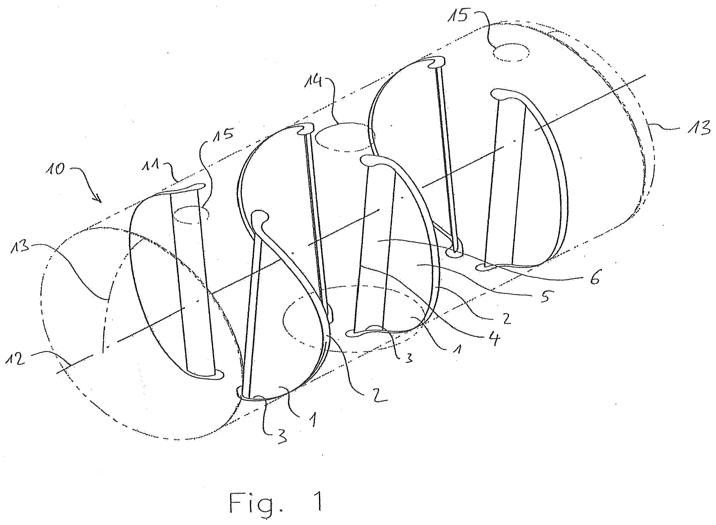

In Fig. 1 ist eine Ausführungsform in Übereinstimmung mit der vorliegenden Erfindung veranschaulicht. Vor einer detaillierten Beschreibung folgen zunächst allgemeine Erläuterungen zu den Ausführungsformen.

Bei einem erfindungsgemäßen Schwallwandelement gemäß einem ersten Aspekt der Erfindung ist ein einwandiges Wandelement vorgesehen, das im Einbauzustand mit seiner Umfangskontur an der Innenseite eines Behälters (z.B. eines Transportbehälters oder Tankcontainers) verbunden, insbesondere verschweißt ist. Die Umfangskontur folgt zumindest abschnittsweise dem Verlauf der (Innen-)Wandkontur des Behälters. Eine freie Kante durchsetzt dabei den Innenraum des Behälters und verbindet die gegenüberliegenden Enden der Umfangskontur miteinander. Bei einem zylindrischen Behälter endet die Umfangskontur typischerweise im Scheitel- und im Sohlenbereich des Behälters. D.h., die freie Kante durchsetzt den Behälter von oben nach unten. Um bei minimalem Materialeinsatz ein einwandiges, schwallstabiles Wandelement darzustellen, ist Folgendes vorgesehen:
Ein erster gekrümmter Wandbereich mit einem ersten Krümmungsradius geht über in einen zweiten Wandbereich mit einem zweiten Krümmungsradius der kleiner als der des ersten Wandbereichs ist. Dabei verläuft der zweite Wandbereich von der Kante ausgehend nach außen und geht in den zweiten Wandbereich mit dem größeren Krümmungsradius über, der lateral nach außen durch den Behälter in Richtung Behälterflanke verläuft. Damit ist eine membranartige, formstabile, einwandige Struktur realisierbar, die trotz einer geringen Wandstärke und einer glatten, leicht zu reinigenden Oberfläche eine vergleichsweise geringe Gesamtoberfläche und damit ein niedriges Gewicht aufweist. Dabei sorgt der zweite stärker gekrümmte Wandbereich für eine Stabilisierung des freien Randes über seine gesamte Länge, während der erste vergleichsweise schwächer gekrümmte Wandbereich materialsparend den äußeren Behälterquerschnitt im Flankenbereich abdeckt.

Dabei verlaufen die Krümmungsachsen zu den Krümmungsradien des ersten und zweiten Wandbereiches auf einer Seite des Schwallwandelementes . Bei so einem Krümmungsverlauf entsteht ein tragflügelähnliches Profil. So ein Schwallwandelement hat eine fertigungstechnisch einfach zu beherrschende Gestalt und ist mit geringen Verformungsgraden aus einer ebenen Platte in einem Biegewalz- bzw. Kantprozess zu festigen. Die beiden Verfahren können gegebenenfalls auch kombiniert werden.

In einer anderen, nicht zur Erfindung gehörigen Ausführung verlaufen die Krümmungsachsen, um welche der erste und zweite Krümmungsradius ausgebildet ist, auf gegenüberliegenden Seiten des Schwallwandelementes. Bei dieser Ausführung entsteht ein mehr oder weniger S-förmiges Profil, welches eine zusätzlich erhöhte Formstabilität aufweisen kann und für besonders große Behälterabmessungen und zur Stabilisierung vergleichsweise langer Kanten geeignet ist. Auch hier gehen die beiden unterschiedlich gekrümmten Wandbereiche weitgehend glatt ineinander über.

Es gibt auch Ausführungen bei denen die Krümmungsradien kontinuierlich ineinander übergehen, also beispielsweise elliptisch. Es gibt auch Krümmungsverläufe, die der Wölbkontur von Klöpper- oder Korbbogenböden entsprechen.

In einer weiteren nicht zur Erfindung gehörenden Ausführung ist dieser Effekt durch einen dritten gekrümmten Wandbereich zusätzlich verstärkt, indem dieser so zum zweiten Wandbereich angeordnet ist, dass seine Krümmungsachse (die dritte Krümmungsachse) der zweiten Krümmungsachse gegenüberliegt. Ausgehend vom Tragflügelprofil entsteht dabei ein S-förmiges, schwanenhals- oder seepferdchenartiges Profil, das in zwei engen Radien in einen größeren Radius übergeht und ausgehend vom durch zwei unterschiedlichen Radien gebildeten S-Profil eine Art Doppel-S-Profil, die im Randbereich zwei gegenläufige enge Krümmungen aufweist, und dann mit geringerer Krümmung zur Seite ausläuft. Ausgehend von zylindrischen Behältern mit einem Durchmesser zwischen 1650 und 2600 mm, die bei Transportbehältern auf Schienen- und Straßentransportfahrzeugen typisch sind, liegt der weite Krümmungsradius des ersten gekrümmten Wandbereichs zwischen dem 0,7-fachen und dem 1,25-fachen des Tankdurchmessers. Der engere Radius des zweiten bzw. dritten gekrümmten Wandbereiches liegt dann in einem Bereich zwischen 75 und 300 mm oder zwischen einem Drittel und einem Fünfundsiebzigstel des Tankdurchmessers bzw. zwischen 25% und 2% des weiten Krümmungsradius. Die Profiltiefe des Schwallwandelementes liegt zwischen. 100 und 300 mm. Der Winkel, in dem das Schwallwandelement seitlich auf die Außenwand trifft, liegt zwischen 45° und 90° und der Winkel zur Tanklängsachse, in dem der zweite oder dritte gekrümmte Wandbereich an der freien Kante endet, ist ≥ 0°. D.h., die Stirnfläche der freien Kante weist im Extremfall genau in Richtung der Behälterlängsachse. Größere Winkel, beispielsweise zwischen 5° und 45° können reinigungstechnisch Vorteile haben, da die Flächen so besser zu benetzen sind. Die Wandstärke (S) des Schwallwandelementes liegt zwischen 2,5 und 6 mm?

Es gibt auch Ausführungen bei denen die Krümmungen der Wandbereiche nicht glatt verlaufen, sondern vielkantig, indem der Krümmungsverlauf durch parallel verlaufende Kantungen in bestimmten Abständen ausgebildet wird. Dieses Fertigungsverfahren kann insbesondere für die engen Radien vorteilhaft sein. Es ist auch möglich, ein Schwallwandelement mit einem großen Krümmungsradius vorzuwalzen und den zweiten stärker gekrümmten Wandbereich mit zusätzlichen Kantungen des bereits vorgekrümmten Schwallwandelementes auszubilden.

In einer weiteren Ausführung kann die Kante zusätzlich verstärkt werden, indem diese als Rundprofil ausgebildet ist. Dazu kann beispielsweise eine runde Stange an die Kante angeschweißt werden. Der Durchmesser der Stange ist dabei größer als die Wandstärke des Wandelements. So ein Abschlussprofil hat mehrere Vorteile. Zum einen verstärkt es die Kante zusätzlich und erhöht die Gesamtstabilität der Schwallwand. Zum anderen werden Spannungsspitzen beim Übergang der Kante in die Behälterwand verringert. Und schließlich erleichtert ein erhöhter Durchmesser im Kantenbereich gerade bei dünnen Schwallwandelementen die Innenbeschichtung solcher Behälter, da das Rundprofil an die minimalen Biegeradien des Auskleidungsmaterials angepasst werden kann.

Es gibt unterschiedliche Schwallwandanordnungen, die mit den erfindungsgemäßen Schwallwandelementen realisierbar sind. Üblicherweise bilden ein Paar Schwallwandelemente, die in einer den Behälter quer durchsetzenden Ebene angeordnet sind, eine Schwallwandanordnung. Dabei sind die jeweiligen Kanten der Schwallwandelemente einander zugewandt und definieren die Ebene, in der die Schwallwandanordnung den Innenraum des Behälters durchsetzt.

Die Kanten können dabei trapezförmig zueinander angeordnet sein und definieren eine passierbare Lücke, die in der Regel im Sohlenbereich schmaler als im Scheitelbereich des Behälters ausgebildet ist. In der so gebildeten Lücke können Tanköffnungen vorgesehen werden, durch die Reinigungsdüsen bzw. Reinigungsköpfe eingebracht werden, die dann den kompletten Innenraum der beiden durch eine Schwallwandanordnung abgetrennte Bereiche benetzen und ausspülen können.

Je nach Größe des Behälters können mehrere Schwallwandanordnungen hintereinander in Längsrichtung des Behälters angeordnet werden.

Dabei kann vorgesehen sein, die zwischen den Schwallwandelementen gebildeten Lücken jeder Schwallwandanordnung jeweils um die Behälterlängsachse gegeneinander zu verdrehen - also nicht flüchtend anzuordnen -, so dass die Schwallwirkung auch in dieser vertikal durch den Behälter in Längsachse verlaufenden Zone zusätzlich gehemmt werden kann.

Es gibt auch Ausführungen, bei denen im Boden- und im Scheitelbereich Zwickelelemente vorgesehen sind, die im Bereich der eng gekrümmten Wandbereiche von der Behälterwand ausgehend schräg nach oben bzw. unten in die gekrümmten Wandbereiche hineinverlaufen. Die so gebildete schräge Fläche erleichtert die Restlos-Entleerung bzw. die Reinigung der Behälter, da Produktreste an diesen schrägen Flächen besser abfließen können. Diese Zwickelelemente können auch dazu dienen, die auftretenden Spannungen, die durch die Schwallbelastung der Schwallwandelemente entstehen und im Bereich der Kanten in den Behälter übertragen werden, besser zu verteilen. Auf diese Weise können Ermüdungsprobleme in den Schwallwandelementen bzw. in der Behälterwand vermieden werden.

Zurückkommend zur Fig. 1, veranschaulicht diese eine erste Ausführungsform der Erfindung. Gezeigt ist ein gestrichelt angedeuteter Behälter 10 mit einem zylindrischen Mantel 11, der um die Behälterlängsachse 12 gekrümmt ist und an seinen Enden mit gewölbten Böden 13 verschlossen ist. Ein solcher Behälter 10 kann als Transportbehälter ausgebildet sein und ist dann insbesondere Bestandteil eines Tankcontainers, eines Straßentankfahrzeugs, eines Schiffs- oder auch eines Eisenbahn-Kesselwagens. Der Behälter 10 weist in seinem oberen Scheitelbereich eine Mannlochöffnung 14 und im vorderen und hinteren Bereich jeweils einen Spülanschluss 15 auf.

Im Inneren des Behälters sind mehrere erfindungsgemäße Schwallwandelemente 1 angeordnet, die über Streifen 2 (z. B. Dopplerbleche) mit dem zylindrischen Mantel 11 verbunden sind. Schwallwandelemente 1, flache Streifen 2, zylindrischer Mantel 11 und die gewölbten Böden 13 sind bei Transportbehältern, insbesondere bei Tankcontainern, in der Regel aus nicht-rostendem Stahl ausgeführt und miteinander verschweißt. Es können jedoch auch andere metallische Werkstoffe (z.B. Aluminium, Baustahl, korrosionsfeste Sonderlegierungen, etc.) verwendet werden. Es gibt auch Sonderkonstruktionen bei denen beispielsweise die Schwallwandelemente 1 und die Blechstreifen 2 metallisch ausgeführt sind und der Behälter 10 beispielsweise aus einem faserverstärktem Kunststoff gebildet wird. In diesem Fall können Schwallwandelemente und Blechstreifen miteinander verschweißt sein und dann z. B. über die Blechstreifen mit dem Behälter verklebt werden. Auch die Schallwandelemente 1 und Streifen 2 können aus faserverstärkten Kunststoffen oder anderen geeigneten Werkstoffen hergestellt sein.

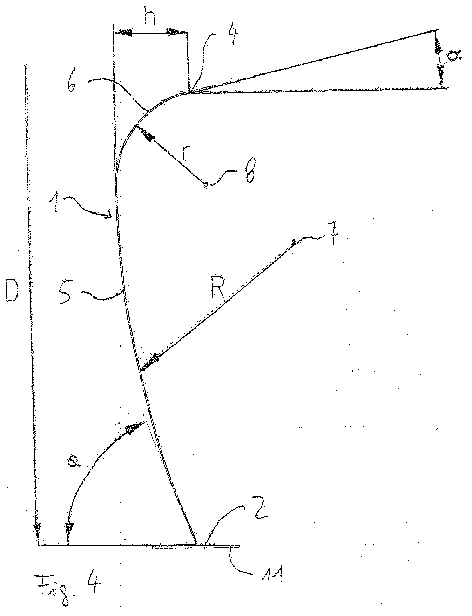

Die Schwallwandelemente 1 haben eine Umfangskontur 3, die entsprechend dem Verlauf der Wandkontur des Behälters 10 bzw. des Mantels 11 ausgebildet ist. Die Enden (Fuß- und Kopfpunkte 4a, 4b) der Umfangskontur 3 sind über eine gerade Kante 4 miteinander verbunden, die den Tankinnenraum durchsetzt. Das Schwallwandelement 1 weist zwei zylindrisch gekrümmte Wandbereiche 5 und 6 auf, dabei ist der erste Wandbereich 5 schwächer gekrümmt als der zweite Wandbereich 6, der stärker gekrümmt ist. D.h., der Krümmungsradius (R) des ersten gekrümmten Wandbereiches 5 ist größer als der zweite Krümmungsradius (r) des zweiten gekrümmten Wandbereiches 6 (vgl. auch Fig. 4).

Dadurch entsteht ein tragflügelähnliches Profil des Schwallwandelements 1. Die zu den Radien R und r gehörigen Krümmungsachsen 7 und 8 verlaufen parallel zur Kante 4 und auf der gleichen Seite des Schwallwandelementes 1.

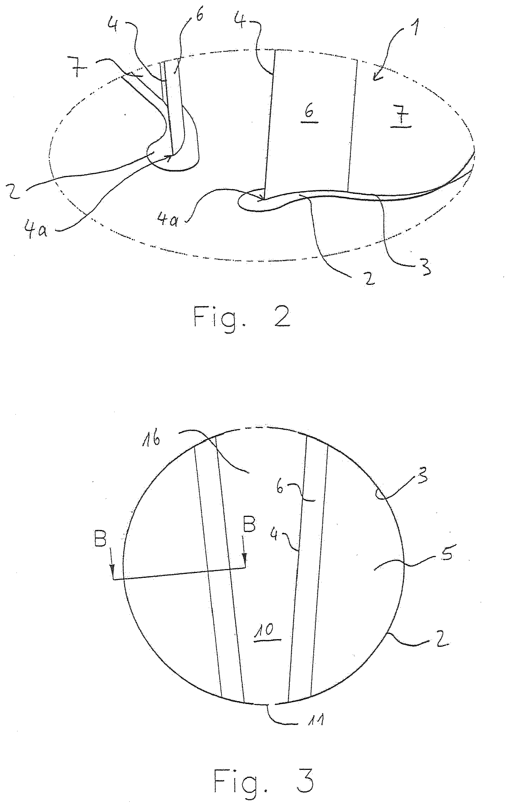

Fig. 2 zeigt ein Anschlussdetail von zwei Schwallwandelementen 1, eines im Bodenbereich des Behälters 1. Dabei ist erkennbar, dass der Streifen 2 im Fußbereich des Schwallwandelementes 1, in dem der zweite Wandbereich 6 mit dem Behälter 10 bzw. dem Blechstreifen 2 verbunden ist, im Bereich des Fußpunktes 4a der Kante 4 mit dem Blechstreifen 2 tränenförmig vergrößert ist. Das Gleiche gilt für den Kopfbereich, wo die Kante 4 am Kopfpunkt 4b im Scheitelbereich des Behälters 10 auf den Blechstreifen 2 trifft (vgl. Fig. 1). Diese tränenförmige Aufweitung des Blechstreifens 2 verbessert die Krafteinleitung der Schwallkräfte, die insbesondere im zweiten Wandbereich 6 und im Bereich der Fuß- und Kopfpunkte 4a, 4b auftreten, in den Behälter 10 und verbessert die Dauerfestigkeit dieser Verbindung.

Fig. 3 zeigt die Ansicht einer Schwallwandanordnung, die aus einem Paar Schwallwandelemente 1 gebildet wird und in einer Ebene angeordnet sind, die den Behälter 10 quer zur Behälterlängsachse 12 durchsetzen. Dabei decken die Schwallwandelemente 1 einer Schwallwandanordnung gemäß den einschlägigen Transportvorschriften wenigstens 70% der Behälterquerschnittsfläche ab, d.h. jedes Schwallwandelement etwa 35%. Die Schwallwandelemente sind etwas schräg verdreht im Behälter 10 angeordnet, sodass die Kanten 4 einen trapezförmigen Durchgangsbereich 16 bilden, der im oberen Bereich etwas weiter ist als im unteren Bereich. Auf diese Weise ist es möglich, eine Schwallwandanordnung mit zwei Schwallwandelementen 1 auch im Mannlochbereich 14 anzuordnen, Mannlochöffnungen 14 haben in der Regel einen Durchmesser von wenigstens 500 mm.

Weiter zeigt Fig. 3 dass der flachgewölbte erste Wandbereich 5 den jeweils seitlichen Querschnittsbereich im Flankenbereich des Behälters 10 komplett abdeckt und entlang der Umfangskontur 3 vollständig mit dem Blechstreifen 2 bzw. dem Behälter am zylindrischen Mantel 11 verbunden ist. Dadurch erhält dieser erste Wandbereich 5 eine hohe Formstabilität. Um jedoch auch den Kantenbereich 4 zu stabilisieren ist der zweite Wandbereich 6 stärker gekrümmt, sodass zum einen die Kante 4 selbst aber auch der Anschlussbereich an den ersten Wandbereich 5 stabilisiert wird und das Schwallwandelement 1 insgesamt so stabilisiert wird, dass die durch die Schwallwirkung auftretenden Biegekräfte vollständig über den Blechstreifen 2 bzw. direkt in den zylindrischen Mantel 11 des Behälters übertragen werden.

Die in Fig. 4 angegebenen Größen des Schnitts B-B geben folgendes an:
- D: entspricht dem Tankdurchmesser
- h: entspricht der Gesamttiefe des Schwallwandelementes 1 in Richtung der Behälterlängsachse 12;
- R: entspricht dem Krümmungsradius des ersten Wandbereichs 5;
- r: dem Krümmungsradius des zweiten Wandbereichs 6;
- s: der Wandstärke des Schwallwandelements 1;
- α: entspricht dem Winkel einer im Kantenbereich an den zweiten Wandbereich 6 angelegten Flächentangente zur Behälterlängsachse 12; und
- ϕ: dem kleinsten Winkel, den eine am äußersten Punkt des ersten Wandbereichs 5 im Aquator/Flankenbereich des Behälters 10 angelegte Flächentangente mit der Behälterlängsachse 12 (bzw. der Behälterwand) bildet.
Typische und bevorzugte Größenverhältnisse ergeben sich aus den nachfolgenden Tabellen:

**Tabelle 1: typisch:**

| | | |
|---|---|---|
| 2600 mm > | D | > 1650 mm |
| 300 mm > | h | > 100 mm |
| 1,25D > | R | > 0,7 D |
| 300 mm > | r | > 75 mm |
| 6mm > | s | > 2 mm |
| | α | > 0° |
| | ϕ | > 45° |

**Tabelle 2: bevorzugt**

| | | |
|---|---|---|
| 2450 mm > | D | > 2000 mm |
| 190 mm > | h | > 130 mm |
| D > | R | > 0,8 D |
| 225 mm > | r | > 155 mm |
| 3,6 mm > | s | > 2,5 mm |
| 45° > | α | > 5° |
| 80° > | ϕ | > 55° |

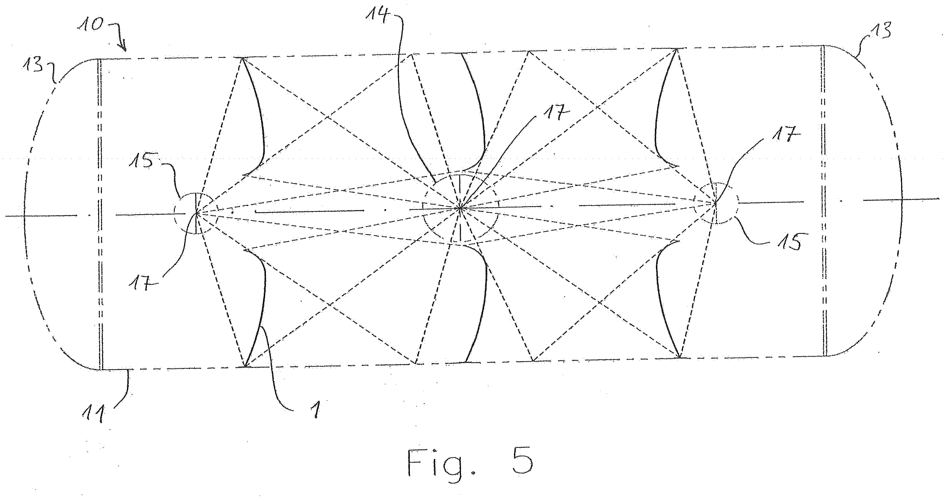

Fig. 5 zeigt die Anordnung dreier Schwallwandanordnungen mit insgesamt sechs Schwallwandelementen 1 bezüglich der Reinigungsöffnungen und die durch gestrichelte Linien angedeuteten wesentlichen Benetzungsbereiche von Sprühköpfen 17, die in der Mannlochöffnung 14 bzw. in den Spülanschlüssen 15 angeordnet sind. Die Darstellung zeigt, dass eine praktisch vollständige Benetzung der Innenoberfläche aller vier Kammern und aller Oberflächen der Schwallwandelemente 1 mit drei Sprühköpfen 17 möglich ist, ohne dass die Schwallwandelemente 1 zueinander geneigt sein müssten.

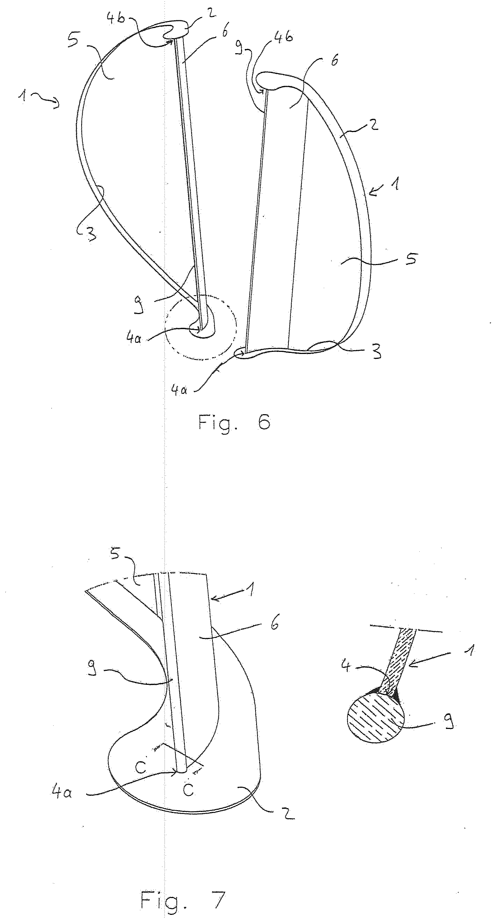

Die Figuren 6 und 7 zeigen eine Ausführung bei der die Kante 4 zusätzlich durch ein Rundprofil 9 verstärkt ist, welches der Kante 4 folgend den Behälter 10 vollständig durchsetzt. Dieses Rundprofil 9 stabilisiert die Kante 4 zusätzlich und verstärkt so das gesamte Schwallwandelement 1 durch die Querschnittsvergrößerung. Gleichzeitig werden die am Fuß- und Kopfpunkt 4a, 4b der Kante 4 auftretenden Spannungen noch besser auf den Blechstreifen 2 verteilt und damit Spannungsspitzen, die zu Ermüdungsschäden führen können, vermieden. Der Durchmesser des Rundprofils 9, das mit der Kante 4 verschweißt ist beträgt ca. 6 bis 20 mm.

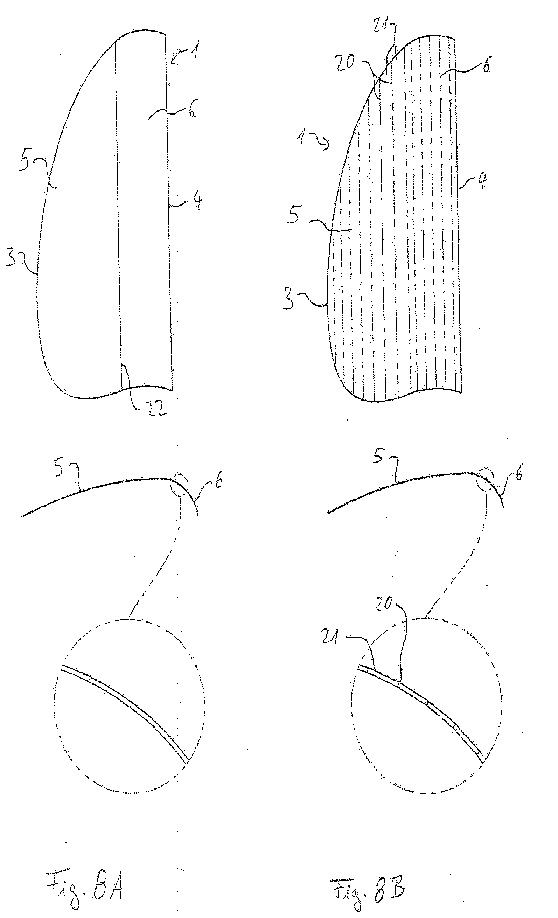

Fig. 8 verdeutlicht unterschiedliche Herstellungsverfahren der Schwallwandelemente 1. Dabei zeigt Fig. 8A die Fertigung eines Schwallwandelementes 1 mit den beiden unterschiedlich gekrümmten Wandbereichen 5 und 6 mittels eines kontinuierlichen Walzbiegeverfahrens. Bei diesem Verfahren wird ein (zugeschnittenes) Blech im ersten Wandbereich mit dem weiten Biegeradius R versehen und im zweiten Wandbereich 6 mit dem engen Biegeradius r. Mit modernen Bearbeitungsmaschinen ist es auch möglich, den Biegeradius kontinuierlich zu verändern, sodass der große Biegeradius R kontinuierlich zum kleineren Endbiegeradius r verringert wird. Damit sind auch elliptische oder andere sich kontinuierlich verändernde Biegeradien R, r möglich.

Fig. 8B zeigt ein Schwallwandelement 1, bei dem die unterschiedlichen Krümmungen über eine Vielzahl von Kantvorgängen entlang der parallelen Kantlinien 20 ausgebildet sind. Die unterschiedlichen Rundungen werden hier durch Kanten 20 und parallele Flächenstreifen 21 angenähert. Es ist auch möglich beide Verfahren zu kombinieren. So ist es beispielsweise möglich den ersten Wandbereich 5 mit dem großen Radius R in einem Walzbiegeverfahren herzustellen und den kleinen Radius r. bzw. die erhöhte Krümmung im zweiten Wandbereich 6, durch einen nachfolgenden (ergänzenden) Kantprozess.

Es gibt auch Verfahren bei denen das Schwallwandelement 1 aus zwei Elementen, die jeweils den ersten Wandbereich 5 und den zweiten Wandbereich 6 bilden, entlang einer Fügelinie 22 zusammengesetzt werden. Die Abmessungen der einzelnen Elemente 5, 6 können dann so bemessen sein, dass diese nachträglich durch die Mannlochöffnung 15 in einen fertigen Behälter 10 eingeführt und dann dort eingesetzt und zusammengefügt werden können.

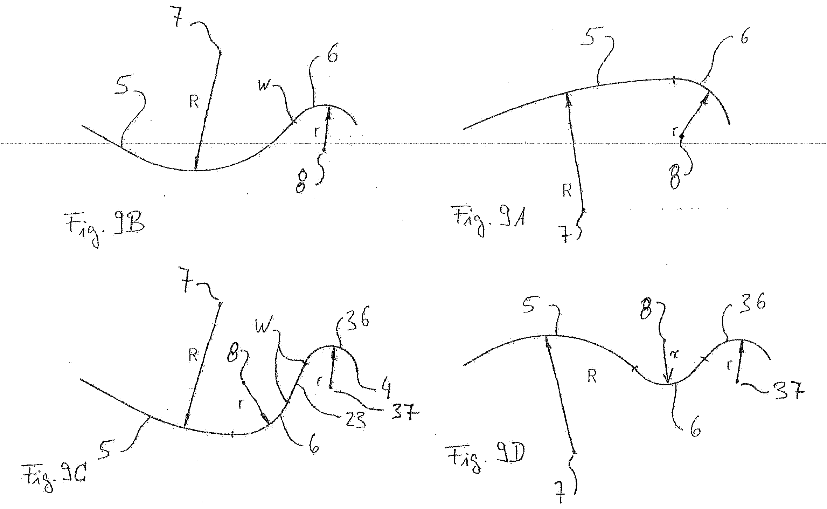

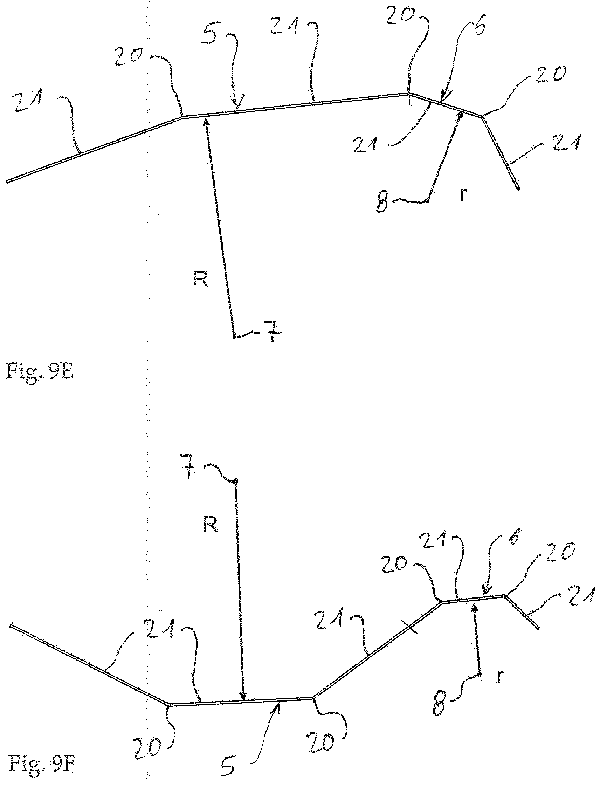

Fig. 9 zeigt Gestaltungsalternativen der Schwallwandelemente 1 hinsichtlich der Krümmungsradien. Fig. 9A zeigt die bereits oben ausführlich besprochene Gestaltung, bei der das Schwallwandelement eine einheitliche Krümmungsrichtung mit unterschiedlichen Krümmungsradien aufweist. Die Krümmungsachsen 7, 8 zu den unterschiedlichen Krümmungsradien R, r befinden sich auf der gleichen Seite des Schwallwandelementes (Tragflügelprofil).

Fig. 9B zeigt eine Gestaltung bei der sich die Krümmungsrichtung ändert, und zwar im Wendepunkt W, die Krümmungsachsen 7, 8 sind zu den gegenüberliegenden Seiten des Schwallwandelementes 1 angeordnet.

Fig. 9C zeigt eine Gestaltung, die aus der in Fig. 9A gezeigten Gestaltung (Tragflügelprofil) abgeleitet ist. Hier ist ein dritter gekrümmter Wandbereich 36 zwischen der Kante 4 und dem zweiten Wandbereich 6 angeordnet. Dieser dritte gekrümmte Wandbereich 36 ist ebenfalls stärker gekrümmt als der erste Wandbereich 5. optional kann zwischen dem zweiten Wandbereich 6 und dem dritten gekrümmten Wandbereich 36 ein gerader Streifen 23 verlaufen, der die Profiltiefe h eines so gestalteten Schwallwandelementes 1 zusätzlich erhöht und damit auch dessen Stabilität und Steifigkeit. Der dritte gekrümmte Wandbereich 36 kann sich aber auch direkt an den zweiten gekrümmten Wandbereich 6 anschließen. Auch hier ändert sich die Krümmungsrichtung im Wendepunkt W. Die Krümmungsachsen 8, 37 zu den Wandbereichen 6 und 36 verlaufen dabei auf gegenüberliegende Seiten des Schwallwandelementes 1. Es entsteht eine schwanenhals- oder seepferdchenähnliche Kontur.

Fig. 9D zeigt einen ähnlichen Aufbau mit einem dritten gekrümmten Wandbereich 36, der aus dem in Fig. 9B dargestellten Aufbau abgeleitet ist. Es entsteht eine ε-ähnliche Kontur.

Auch die in den Fig. 9A bis 9D dargestellten Gestaltungsalternativen können durch Kantvorgänge angenähert werden. Die Radien R und r der ersten und zweiten Wandbereiche 5, 6 können dabei bereits durch wenige Kantungen mit unterschiedlichen Kantwinkeln und Abständen der Kantlinien 20 angenähert werden. So zeigt Fig. 9E ein mit drei Kantungen (Kantlinien 20) und unterschiedlich breiten Flächenstreifen 21 angenähertes Tragflügelprofil (vgl. auch Fig. 9A) und Fig. 9F ein mit vier Kantungen (Kantlinien 20) und unterschiedlich breiten Flächenstreifen 21 angenähertes Profil mit entgegengesetzt und unterschiedlich gekrümmten Wandbereichen 5, 6 (vgl. auch Fig. 9B). Auch die in Fig. 9C und 9D dargestellten Profile sind in gleicher Weise anzunähern.

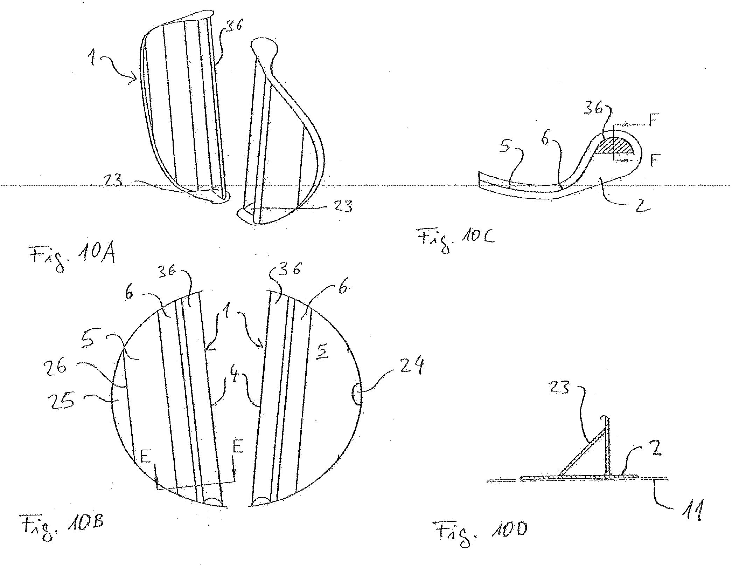

Fig. 10 zeigt ein weiteres Ausführungsdetail, welches insbesondere im Zusammenhang mit der in Fig. 9C dargestellten Ausführung Vorteile bietet. Im Fußbereich des dritten gekrümmten Wandbereichs 36 ist hier jeweils Knotenblech 23 vorgesehen. Dies verhindert zum einen, dass sich Ladegut am Boden des Behälters 10 im Bereich des dritten gekrümmten Wandbereichs 36 ansammelt. Zum anderen verteilt es die bei Belastung des Schwallwandelementes auftretenden Spannungen besser im Fußbereich 4a auf dem Blechstreifen 2 verteilt und damit reduziert. Ein solches Knotenblech 23 kann zur besseren Spannungsverteilung auch im Kopfbereich des dritten gekrümmten Wandbereichs 36 angebracht werden. Je nach Wahl der Krümmungsradien der stärker gekrümmten zweiten Wandbereiche 6 kann auch bei den anderen Ausführungen dort ein entsprechendes Knotenblech vorgesehen werden (vgl. auch dazu die Darstellungen der Figuren 10B-C).

Die Fig. 10B zeigt zwei weitere Ausführungsalternativen im Flankenbereich der Schwallwandelemente 1. Die rechte Seite der Darstellung zeigt eine etwa halbkreisförmige Ausnehmung 24 im ersten Wandbereich 5 des Schwallwandelementes 1.

Die linke Seite zeigt einen freien Bereich 25, der dadurch entsteht, dass der erste Wandbereich 5 des Schwallwandelementes 1 im Flankenbereich gerade abgeschnitten ist und dort in einer weiteren Kante 26 endet. Beide Ausführungen dienen dazu, dass auch bei einem havarierten Behälter 10 in Seitenlage eine kommunizierende Verbindung zwischen den einzelnen durch die Schwallwandelemente 1 abgetrennten Bereichen oder Kammern gewährleistet ist.

Fig.1, 2, 5 und 6 zeigen Schwallwandanordnungen, bei denen die Kanten 4 der Schwallwandelemente jeweils paarweise in die gleiche Richtung der Behälterlängsachse 12 weisen, es gibt auch Anordnungen bei der Kanten der Schwallwandelemente 1 einer Schwallwandanordnung jeweils in entgegengesetzte Richtungen der Behälterlängsachse 12 weisen.

Weitere Ausführungen und Varianten der Erfindung ergeben sich auch für den Fachmann im Rahmen der angefügten Ansprüche.

## Patentansprüche

1. Schwallwandelement (1) für einen Behälter (10), das als einwandiges Wandelement ausgebildet ist, das
eine Umfangskontur (3) hat, die wenigstens teilweise dem Verlauf einer Wandkontur des Behälters (10) entsprechend ausgebildet ist,
eine Kante (4), die bei in den Behälter (10) eingebautem Schwallwandelement (1) einen Innenraum des Behälters (10) durchsetzt und die Enden (4a, 4b) der Umfangskontur (3) miteinander verbindet,
einen ersten gekrümmten Wandbereich (5) mit einem ersten Krümmungsradius (R) und einen zweiten gekrümmten Wandbereich (6) mit einem zweiten Krümmungsradius (r), wobei der erste Krümmungsradius (R) großer ist als der zweite Krümmungsradius (r) und der zweite gekrümmte Wandhereich (6) zwischen der Kante (4) und dem ersten gekrümmten Wandbereich (5) verläuft, wobei der erste und zweite Krümmungsradius (R, r) um parallel und auf der gleichen Seite des Schwallwandelements (1) verlaufende Krümmungsachsen (7, 8) ausgebildet sind, so dass das Schwallwandelement (1) ein tragflügelähnliches Profil aufweist.

2. Schwallwandelement (1) nach Anspruch 1, wobei wenigstens einer der gekrümmten Wandbereiche (5, 6) durch parallel verlaufende Kantungen (20) und ebene Flächenelemente (21) ausgebildet ist.

3. Schwallwandelement (1) nach einem der vorhergehenden Ansprüche, wobei der Krümmungsradius (R) des ersten gekrümmten Wandbereichs (5) in einem Bereich zwischen dem 0, 7 fachen und 1, 25 fachen des Tankdurchmessers (D) liegt und der Krümmungsradius (r) des zweiten gekrümmten Wandbereiches zwischen 25% und 2% des Krümmungsradius (R) beträgt.

4. Schwallwandelement (1) nach einem der vorhergehenden Ansprüche, bei dem die Krümmungsradien (R, r) wenigstens teilweise kontinuterlich in einender übergehen und insbesondere einen elliptischen Krümmungsverlauf haben.

5. Schwallwandelement (1) nach einem der vorhergehenden Ansprüche, wobei die Kante (4) als Rundprofil (9) ausgebildet ist, dessen Durchmesser größer ist als eine Wandstärke (s) des Schwallwandelements (1).

6. Schwallwandanordnung mit wenigstens einem Paar Schwallwandelementen (1) nach einem der vorhergehenden Ansprüche, bei welchem zwei Schwallwandelemente so nebeneinander angeordnet sind. dass deren zugewandte Kanten eine Ebene bilden, die quer zu einer den Innenraum durchsetzenden Behälterachse, insbesondere eine Behälterlängsachse (12), verlaufen.

7. Tankcontainer mit einem Schwallwandelement (1) nach einem der Ansprüche 1 bis 5 und/oder einer Schwallwandanordnung nach Anspruch 6.

8. Behälter (10) mit einem Schwallwandelement (1) nach einem der Ansprüche 1 bis 5 und/oder einer Schwallwandanordnung nach Anspruch 6, das mit seiner Umfangskontur an der Innenseite des Behälters (10) mit diesem verbunden ist.

## Claims

1. Surge baffle element (1) for a vessel (10), which is formed as a single shelled baffle element, comprising
a circumferential outline (3) which is formed to follow at least partially the run of a shell contour of the vessel (10),
an edge (4), which intersects an inner space of the vessel (10), if the surge baffle element (1) is mounted inside the vessel (10) and connects the ends (4a, 4b) of the circumferential outline (3),
a first bended baffle area (5) having a first bending radius (R) and a second bended baffle area (6) having a second bending radius (r), wherein the first bending radius (R) is larger than the second bending radius (r) and the second bended baffle area (6) is arranged between the edge (4) and the first bended baffle area (5), wherein the first and the second bending radius (R, r) is formed about bending axes (7, 8) which are running parallel and at the same side of the surge baffle element (1), so that the surge baffle element (1) has an aerofoil like profile.

2. Surge baffle element (1) according to claim 1, wherein at least one of the bended baffle areas (5, 6) is formed by parallel folds (20) and plane areas (21).

3. Surge baffle element (1) according to one of the preceding claims, wherein the bending radius (R) of the first bended baffle area (5) equals a range between 0.7 times and 1.25 times of the vessel diameter (D) and the bending radius (r) of the second bended baffle area equals a range between 25 % and 2 % of the bending radius (R).

4. Surge baffle element (1) according to one of the preceding claims, wherein the bending radii (R, r) at least partially migrate stepless into each other and specifically show an elliptic bending radiant.

5. Surge baffle element (1) according to one of the preceding claims, wherein the edge (4) is formed as a round profile (9), which has a diameter which is larger than the shell thickness (s) of the surge baffle element (1).

6. Surge baffle arrangement comprising at least one pair of surge baffle elements (1) according to one of the preceding claims, wherein two surge baffle elements are arranged side by side in a way that the facing edges define a plane, which extends transversally to a vessel axis intersecting the inner space, specifically to a longitudinal vessel axis (12).

7. Tank container having a surge baffle element (1) according to one of claims 1 to 5 and/or a surge baffle arrangement according to claim 6.

8. Vessel (10) having a surge baffle element (1) according to one of claims 1 to 5 and/or a surge baffle arrangement according to claim 6 which is connected with its circumferential outline to the inner face of the vessel (10).

## Revendications

1. Elément brise-flot (1) pour conteneur (10), conçu sous forme d'élément de paroi à paroi unique comprenant :
un contour périphérique (3) lequel est formé de manière à correspondre au moins partiellement au tracé d'un contour de paroi du conteneur (10),
un bord (4), lequel, lorsqu'un élément brise-flot (1) est monté dans le conteneur (10), traverse un espace intérieur du conteneur (10) et relie les extrémités (4a, 4b) du contour périphérique (3),
une première zone de paroi incurvée (5) avec un premier rayon de courbure (R) et une seconde zone de paroi incurvée (6) avec un second rayon de courbure (r), le premier rayon de courbure (R) étant supérieur au second rayon de courbure (r) et la seconde zone de paroi incurvée (6) s'étendant entre le bord (4) et la première zone de paroi incurvée (5), les premier et second rayons de courbure (R, r) étant formés autour d'axes de courbures (7, 8) s'étendant parallèlement et du même côté de l'élément brise-flot (1), da manière à ce que l'élément brise-flot (1) présente un profil ressemblant à une aile portante.

2. Elément brise-flot (1) selon la revendication 1, dans lequel au moins une des zones de paroi incurvées (5, 6) est formée par des arêtes (20) s'étendant parallèlement et des éléments de surface (21) plans.

3. Elément brise-flot (1) selon l'une des revendications précédentes, dans lequel le rayon de courbure (R) de la première zone de paroi incurvée (5) est compris entre 0,7 fois et 1,25 fois le diamètre du réservoir (D), et le rayon de courbure (r) de la seconde zone de paroi incurvée est compris entre 25% et 2% du rayon de courbure (R).

4. Elément brise-flot (1) selon l'une des revendications précédentes, dans lequel les rayons de courbures (R, r) se confondent au moins partiellement de manière continue et, en particulier, présentent un profil de courbure elliptique.

5. Elément brise-flot (1) selon l'une des revendications précédentes, dans lequel le bord (4) est conçu sous forme de profil rond (9) dont le diamètre est supérieur à une épaisseur de paroi (s) de l'élément brise-flot (1).

6. Agencement brise-flot comprenant au moins une paire d'éléments brise-flot (1) selon l'une des revendications précédentes, dans lequel deux éléments brise-flots (1) sont agencés l'un à côté de l'autre de façon à ce que leurs bords tournés l'un vers l'autre forment un plan lequel est transversal à un axe de conteneur traversant l'espace intérieur, en particulier un axe longitudinal de conteneur (12).

7. Conteneur citerne comprenant un élément brise-flot (1) selon l'une des revendications 1 à 5 et/ou un agencement brise-flot selon la revendication 6.

8. Conteneur (10) comprenant un élément brise-flot (1) selon l'une des revendications 1 à 5 et/ou un agencement brise-flot selon la revendication 6 relié à la face intérieure du conteneur (10) par l'intermédiaire de son contour périphérique.
